# EUROPÄISCHE PATENTSCHRIFT

(11) **EP 1 945 924 B1**
(45) Veröffentlichungstag und Bekanntmachung des Hinweises auf die Patenterteilung: **08.07.2009**
(21) Anmeldenummer: 06828996.6
(22) Anmeldetag: 10.11.2006
(51) Int. Cl.: F01N 3/28, B23K 1/00

(54) **WABENKÖRPER FÜR EINE ABGASBEHANDLUNGSEINHEIT**
HONEYCOMB FOR AN EXHAUST GAS TREATMENT UNIT
CORPS EN NID D'ABEILLES POUR UNE UNITE DE TRAITEMENT DES GAZ D'ECHAPPEMENT

(30) Priorität: 11.11.2005 DE 102005054310
(43) Veröffentlichungstag der Anmeldung: 23.07.2008
(73) Patentinhaber: Emitec Gesellschaft für Emissionstechnologie mbH, 53797 Lohmar (DE)
(72) Erfinder: WIERES, Ludwig, 51491 Overath (DE); SCHOLZ, Alexander, 53125 Bonn (DE)
(74) Vertreter: Rössler, Matthias
(86) Internationale Anmeldenummer: PCT/EP2006/010788
(87) Internationale Veröffentlichungsnummer: WO 2007/054331

(56) Entgegenhaltungen:
- WO-A-01/79669
- WO-A-99/37896
- WO-A-03/087548
- WO-A-20/04037394

## Beschreibung

Die vorliegende Erfindung betrifft einen Wabenkörper für eine Abgasbehandlungseinheit, die wenigstens eine Wabenstruktur und zumindest ein Gehäuse umfasst, welches die wenigstens eine Wabenstruktur zumindest teilweise umgibt. Die vorliegende Erfindung betrifft insbesondere die Ausbildung einer Hartlot-Verbindung zwischen der Wabenstruktur und dem Gehäuse. Solche Wabenkörper werden vielfach zur Reinigung von Abgasen in Kraftfahrzeugen eingesetzt.

Solche Wabenkörper weisen in der Regel eine metallische oder keramische Wabenstruktur auf. Auch wenn die nachfolgenden Aspekte vielfach auch für keramische Wabenstrukturen anwendbar sind, so wird hier insbesondere eine metallische Wabenstruktur betrachtet, die mittels einer Hartlot-Verbindung an bzw. in dem Gehäuse fixiert wird. Die Ausbildung gezielter Hartlot-Verbindungen ist von besonderer Bedeutung, um eine dauerhafte Verbindung von Wabenstruktur und Gehäuse zu gewährleisten. Dies hat seinen Ursprung darin, dass beide Komponenten ein unterschiedliches thermisches und dynamisches Verhalten in Abgasanlagen mobiler oder stationärer Verbrennungskraftmaschinen zeigen. Für eine gewisse Relativbewegung von Wabenstruktur und Gehäuse zueinander ist es gewünscht, dass beide nur teilweise, also nicht über die gesamte Mantel- bzw. Kontaktfläche, miteinander verlötet sind.

Grundsätzlich sind bereits eine Vielzahl von Möglichkeiten beschrieben wurde, wie und an welchen Stellen Hartlot appliziert und eine Hartlot-Verbindung generiert werden soll. Dabei wurde bis jetzt jedoch nicht in ausreichendem Maße berücksichtigt, dass gerade während des Lötprozesses selbst oder auch schon bereits während der Montage des Wabenkörpers bzw. der nachfolgenden Lagerung oder dem Transport Zustände vorliegen können, die dazu führen, dass sich die Hartlot-Verbindungen schließlich über den gewünschten Bereich hinaus erstrecken. Eine solche Ausbreitung der Hartlot-Verbindungen über den gewünschten Bereich hinaus führt zu einem veränderten thermischen Ausdehnungsverhalten des Wabenkörpers, was unter Umständen zu Fehlfunktionen des Wabenkörpers führen kann.

Die WO-A1-01/79669 beschreibt einen Wabenkörper, der zur gezielten Verhinderund einer fügetechnischen Verbindung von Wabenstruktur und Gehäuse in Teilbereichen der Innenwandung des Gehäuses eine Passivierungsschicht aufweist.

Die WO-A1-03/087548 offenbart einen Katalysator-Trägerkörper mit Gehäuse. Wabenkörper und dazwischen angeordnetem Wellmantel, wobei der Wellmantel oder das Gehäuse mindestens ein Lotbegrenzungsmittel aufweist.

Hiervon ausgehend ist es Aufgabe der vorliegenden Erfindung, die mit Bezug auf den Stand der Technik geschilderten technischen Probleme zumindest teilweise zu lösen. Insbesondere soll ein Wabenkörper angegeben werden, der exakt begrenzte Hartlot-Verbindungen auch im Rahmen einer Serienfertigung gewährleistet. Weiterhin soll auch ein Verfahren zur Herstellung eines Wabenkörpers angegeben werden, bei dem derartig scharf begrenzte Hartlot-Verbindungen erreicht werden.

Diese Aufgaben werden gelöst mit einem Wabenkörper mit den Merkmalen des Patentanspruchs 1 sowie einem Verfahren zur Herstellung eines Wabenkörpers mit den Merkmalen des Patentanspruchs 65. Weitere vorteilhafte Ausgestaltungen sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere vorteilhafte Ausgestaltungen der Erfindung aufzeigen.

Der erfindungsgemäße Wabenkörper für eine Abgasbehandlungseinheit weist wenigstens eine Wabenstruktur und zumindest ein Gehäuse auf, das die wenigstens eine Wabenstruktur zumindest teilweise umgibt, wobei wenigstens ein Bereich zwischen Wabenstruktur und Gehäuse mit einer Hartlot-Verbindung ausgeführt ist. Dabei zeichnet sich der Wabenkörper dadurch aus, dass mindestens zwei voneinander verschiedene Mittel zur Begrenzung der Hartlot- Verbindung vorgesehen sind.

Der Wabenkörper dient insbesondere als Katalysator-Trägerkörper, als Filter, als Adsorber oder eine ähnliche Abgasbehandlungseinheit für den Einsatz z. B. in Abgassystemen von Kraftfahrzeugen. Bevorzugt weist ein Wabenkörper genau eine Wabenstruktur und genau ein Gehäuse auf, wobei die Wabenstruktur bevorzugt vollständig von dem Gehäuse umschlossen ist. Im Hinblick auf die Anzahl der Bereiche mit Hartlot-Verbindungen ist eine Anpassung an die jeweilige thermische Belastung vorzunehmen, wobei in vielen Fällen ein einzelner Bereich der Kontaktfläche zwischen Wabenstruktur und Gehäuse als Bereich für eine Hartlot-Verbindung als ausreichend anzusehen ist.

Zur Gewährleistung der gewünschten Begrenzung und der Hartlot-Verbindung sind nun separate Mittel vorgesehen, wobei hier zwei voneinander verschiedene Mittel eingesetzt werden. Diese Mittel sind regelmäßig am Rand bzw. außerhalb des Bereichs der Hartlot-Verbindung angeordnet. Sie haben die Funktion, einen unerwünschten Hartlot-Fluss (beispielsweise während des Lötprozesses und/oder während der Montage des Wabenkörpers) zu unterbinden. Ganz besonders bevorzugt dienen die Mittel zur Begrenzung der Hartlot-Verbindung zur Unterbrechung einer Kapillarwirkung für das Hartlot und/oder für einen Abrieb des Hartlotes.

Die Mittel des erfindungsgemäßen Wabenkörper umfassen wenigstens zwei aus der folgenden Gruppe von Mitteln:
- eine Nut im Gehäuse,
- eine Mikrostruktur außen an der Wabenstruktur,
- eine keramische Beschichtung,
- eine zwischen der Wabenstruktur und dem Gehäuse angeordnete Zwischenschicht.

Die Nut im Gehäuse ist bevorzugt umlaufend ausgebildet, wobei sie beispielsweise eine Tiefe im Bereich von 0,1 bis 0,5 mm und eine Breite im Bereich von 0,5 bis 2,0 mm hat. Die Nut hat bevorzugt einen Querschnitt, der im Wesentlichen einem Halbkreis entspricht. Vorteilhafterweise liegt die Nut direkt am Rand des Bereichs der Hartlot-Verbindung an. Unter Umständen ist es auch sinnvoll, einseitig oder beidseitig zu einem Bereich mit der Hartlot-Verbindung mehrere, insbesondere direkt benachbarte Nuten vorzusehen. In einer bevorzugten Ausführungsvariante ist genau eine Nut zur Abgrenzung gegenüber weiter innen liegende Teilbereiche des Wabenkörpers vorgesehen.

Eine Mikrostruktur umfasst insbesondere radial auswärts gerichtete Erhebungen der Wabenstruktur, die beispielsweise einen kontinuierlichen oder diskontinuierlichen Linienkontakt in Umfangsrichtung der Wabenstruktur mit dem Gehäuse generieren. Die Mikrostruktur kann beispielsweise außen auf der Mantelfläche der Wabenstruktur aufgebracht bzw. ausgearbeitet sein, es ist jedoch auch möglich, diese Mikrostruktur mit separaten Bauteilen, die zwischen der Wabenstruktur und dem Gehäuse angeordnet sind, auszubilden.

Die Vorsehung einer keramischen Beschichtung, insbesondere Aluminiumoxid oder ähnliche Materialien, hat zur Folge, dass sich darauf keine Hartlot-Partikel ansammeln bzw. dass die keramische Beschichtung als eine Art Lotstop fungiert. Die keramische Beschichtung kann auch Teil der Wabenstruktur und/oder des Gehäuses sein.

Weiter ist auch möglich, dass eine Zwischenschicht zwischen Wabenstruktur und Gehäuse vorgesehen ist. Bevorzugt ist dabei die Ausgestaltung, bei der die Zwischenschicht ein separates Bauteil ist, beispielsweise eine separate Metallfolie. Diese dient als eine Art Barriere für einen unerwünschten Hartlot-Fluss zwischen Wabenstruktur und Gehäuse.

Gemäß einer weiteren Ausgestaltung des Wabenkörpers ist die Wabenstruktur mit einer Mehrzahl von zumindest teilweise strukturierten metallischen Lagen gebildet, die eine Materialdicke kleiner 80 µm aufweisen. Insbesondere ist die Wabenstruktur mit einer Mehrzahl von glatten und gewellten Metallfolien aufgebaut, die gewickelt und/oder gewunden sind. Dabei begrenzen diese regelmäßig eine Vielzahl von im Wesentlichen parallel zueinander verlaufenden Kanälen, die für ein Abgas durchströmbar sind. Die Kanaloberfläche dient regelmäßig als Filter- bzw. Katalysatorträger-Fläche. Die Materialdicke der metallischen Lagen bzw. der Metallfolien ist bevorzugt sogar kleiner 50 µm. Solche Wabenstrukturen werden mit einer relativ hohen Vorspannung in das Gehäuse eingebracht, so dass hierbei beachtliche Reibkräfte entstehen. Dies führt nun dazu, dass bei einer vorher stattfmdenden Applikation des Hartlots im Gehäuse beim Einschieben der Wabenstruktur das Hartlot abgerieben bzw. "verschoben" wird. Um gleichwohl noch eine exakt begrenzte Hartlot-Verbindung im gewünschten Bereich zu generieren, sind die verschiedenen Mittel zur Begrenzung der Hartlot-Verbindung vorgesehen.

Des Weiteren wird auch vorgeschlagen, dass ein umlaufender Bereich einer Hartlot-Verbindung vorgesehen ist, und die Mittel zur Begrenzung zwischen diesem Bereich einer Hartlot-Verbindung und einer Stirnseite eines Wabenkörpers angeordnet sind. Das heißt mit anderen Worten, dass die zumindest zwei voneinander verschiedenen Mittel auf einer Seite des Bereichs einer Hartlot-Verbindung angeordnet sind, also eine Art Doppel-Barriere vorgesehen ist. Besonders bevorzugt ist dabei die Ausgestaltung, dass jeweils ein Mittel zur Begrenzung der Hartlot-Verbindung in den verschiedenen Teilen des Wabenkörpers (Gehäuse, und/oder Wabenstruktur und/oder Zwischenschicht) vorgesehen ist.

Noch einer weiteren Ausführungsform des Wabenkörpers zur Folge ist der mindestens eine Bereich einer Hartlot-Verbindung näher an einer zweiten Stirnseite als einer ersten Stirnseite angeordnet, wobei die Mittel zwischen der ersten Stirnseite und dem Bereich vorgesehen sind. Ganz besonders bevorzugt ist der Bereich im Wesentlichen im Anschluss an die zweite Stirnseite ausgebildet, wobei die Mittel, die hin zur ersten Stirnseite angeordnet sind, einen unerwünschten Hartlot-Fluss hin zur ersten Stirnseite behindern.

Gemäß einem weitem Aspekt der Erfindung wird ein Verfahren zur Herstellung eines Wabenkörpers vorgeschlagen, welcher wenigstens eine Wabenstruktur oder zumindest ein Gehäuse aufweist, das die wenigstens eine Wabenstruktur zumindest teilweise umgibt, wobei dieses Verfahren zumindest folgende Schritte umfasst:
- Auswahl wenigstens eines Bereiches einer Hartlot-Verbindung zwischen Wabenstruktur und Gehäuse,
- Auswahl einer Einschubrichtung der Wabenstruktur in das Gehäuse,
- Vorsehen einer Nut im Gehäuse, welche in Einschubrichtung gesehen vor dem Bereich einer Hartlot-Verbindung positioniert ist,
- Vorsehen eines weiteren Mittels zur Begrenzung der Hartlot-Verbindung aus der Gruppe:;
   - Mikrostruktur außen an der Wabenstruktur.
   - keramische Beschichtung,
   - zwischen der Wabenstruktur und dem Gehäuse angeordnete Zwischenschicht,
- Beloten des Bereichs,
- Einschieben der Wabenstruktur in das Gehäuse,
- Ausbilden einer Hartlot-Verbindung im Bereich.

Besonders bevorzugt wird als weites Mittel zur Begrenzung der Hartlot-Verbindung eine keramische Beschichtung vorgesehen, die vorteilhafterweise an der Wabenstruktur angebracht ist. Das Verfahren findet besonders bevorzugte Anwendung zur Herstellung des vorstehend genannten erfindungsgemäßen Wabenkörpers, wobei insbesondere auf die Herstellung eines metallischen Wabenkörpers mit metallischen Lagen abgestellt wird. Gerade bei den dünnen Metallfolien, die dabei eingesetzt werden, treten verstärkt die teilweise unerwünschten Kapillareffekte auf, so dass gerade hier neue Sicherungsmaßnahmen zur Vermeidung dieses Phänomens zwischen Gehäuse und Wabenstruktur vorgenommen wurden.

Die vorliegende Erfindung wird nachfolgend mit Bezug auf die beigefügten Figuren näher erläutert. Die Figuren zeigen unter anderem besonders bevorzugt Ausführungsvarianten der Erfindung, auf die diese jedoch nicht begrenzt ist. Es zeigen schematisch:
- Fig. 1: eine erste Ausführungsvariante des erfindungsgemäßen Wabenkör- pers,
- Fig. 2: ein Detail einer weiteren Ausführungsvariante des erfindungsgemäßen Wabenkörpers, und
- Fig. 3: ein Detail einer dritten Ausführungsvariante des erfindungsgemäßen Wabenkörpers.

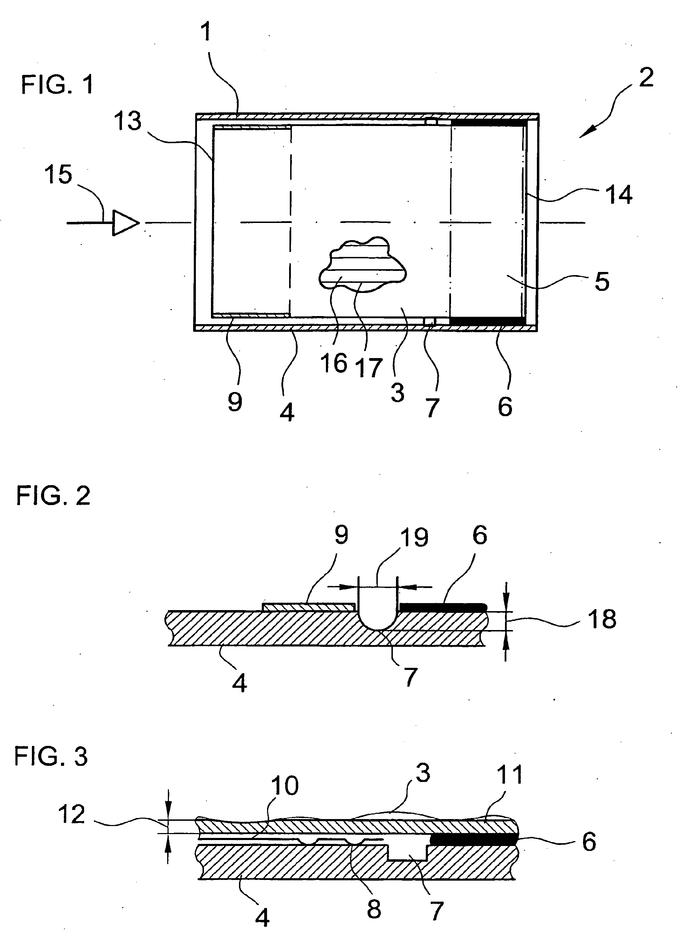

Fig. 1 veranschaulicht schematisch und in einem Teilquerschnitt einen Wabenkörper 1 für eine Abgasbehandlungseinheit 2. Der Wabenkörper 1 umfasst eine Wabenstruktur 3 und ein Gehäuse 4, das die Wabenstruktur 3 vollständig umgibt. Zwischen der Wabenstruktur 3 und dem Gehäuse 4 ist ein Bereich 5 zur Ausbildung einer Hartlot-Verbindung 6 vorgesehen. Dabei ist der Bereich 5 einer Hartlot-Verbindung 6 näher an der zweiten Stirnseite 14 positioniert als an der ersten Stirnseite 13. Zusätzlich weist der Wabenkörper 1 an zwei unterschiedliche Mittel zur Begrenzung der Hartlot-Verbindung 6 auf, nämlich einerseits eine Nut 7, die umlaufend im Gehäuse 4 ausgebildet ist, sowie eine keramische Beschichtung 9, die außen nahe der ersten Stirnseite 13 der Wabenstruktur 3 vorgesehen ist.

Zur Herstellung eines solchen Wabenkörpers 1 wurde zunächst der eine Bereicht 5 einer Hartlot-Verbindung 6 nahe der zweiten Stirnseite 14 ausgewählt. Im Anschluss daran wurde entschieden, dass der Wabenkörper 1 während der Montage entlang der Einschubrichtung 15 in das Gehäuse 4 eingesetzt wird. Um einen unerwünschten Hartlot-Fluss während der thermischen Behandlung des Wabenkörpers 1 hin zur ersten Stirnseite 13 zu unterbinden, wurde eine umlaufende Nut 7 im Gehäuse 4 vorgesehen, welche in Einschubrichtung 15 gesehen vor dem Bereich 5 positioniert ist. Der Vollständigkeit sei auch darauf hingewiesen, dass bei größerer Entfernung des Bereichs 5 von der zweiten Stirnseite 14. auch auf der anderen Seite eine Nut 7 vorgesehen sein kann, die beispielsweise das ungewünschte Mitreißen von Hartlot während des Einschiebend verhindert.

Nunmehr wurde die Wabenstruktur 3 mit einer Mehrzahl von zumindest teilweise strukturierten metallischen Folien 17 gebildet, wobei eine Vielzahl von im Wesentlichen parallel zueinander verlaufenden Kanäle 16 erzeugt wurden. Diese Wabenstruktur 3 wurde, nachdem zunächst auf der Innenseite des Gehäuses 4 ein Streifen mit Hartlot im Bereich 5 vorgesehen wurde, entlang der Einschubrichtung 15 in das Gehäuse 4 eingesetzt. Nach Erreichen der gewünschten Relativlage zum Gehäuse 4 wurde der Wabenkörper 1 einer thermischen Behandlung unterzogen, so dass sich im Bereich 5 exakt die gewünschte Hartlot-Verbindung 6 ausbildete. Ein solcher Wabenkörper 1 zeichnet sich durch eine hohe Lebenserwartung selbst unter hohen thermischen und dynamischen Belastungen im Abgassystem eines Kraftfahrzeuges aus.

Fig. 2 zeigt schematisch ein Detail einer weiteren Ausführungsvariante der Mittel zur Begrenzung der Hartlot-Verbindung 6. Wiederum ist eine Nut 7 mit einer definierten Breite 19 und einer vorgegebenen Tiefe 18 ausgebildet. Auf der einen Seite der Nut 7 ist der Bereich mit der Hartlot-Verbindung 6 ausgebildet, auf der gegenüberliegenden Seite ist am Gehäuse 4 eine keramische Beschichtung 9 vorgesehen.

Fig. 3 zeigt eine Ausführungsvariante, wobei zusätzlich zu einer Nut 7 im Gehäuse 4 eine Zwischenschicht 10 zwischen der Wabenstruktur 3 und dem Gehäuse 4 vorgesehen ist. Die Wabenstruktur 3 ist mit metallischen Lagen 11 einer vorgegebenen Materialdicke 12 ausgebildet. Die Zwischenschicht 10, die hier als Metallfolie mit Mikrostrukturen 8 ausgebildet ist, ist ebenfalls zwischen der ersten Stirnseite 13 und der Nut 7 ausgebildet. Besonders bevorzugt ist die Ausführungsvariante, bei der die Mikrostruktur 8 der Zwischenschicht 10 parallel zur Nut 7 umlaufend ausgebildet ist.

### Bezugszeichenliste

- 1: Wabenkörper
- 2: Abgasbehandlungseinheit
- 3: Wabenstruktur
- 4: Gehäuse
- 5: Bereich
- 6: Hartlot-Verbindung
- 7: Nut
- 8: Mikrostruktur
- 9: Beschichtung
- 10: Zwischenschicht
- 11: Lage
- 12: Materialdicke
- 13: erste Stirnseite
- 14: zweite Stirnseite
- 15: Einschubrichtung
- 16: Kanal
- 17: Folie
- 18: Tiefe
- 19: Breite

## Patentansprüche

1. Wabenkörper (1) für eine Abgasbehandlungseinheit (2) aufweisend wenigstens eine Wabenstruktur (3) und zumindest ein Gehäuse (4), das die wenigstens eine Wabenstruktur (3) zumindest teilweise umgibt, wobei wenigstens ein Bereich (5) zwischen Wabenstruktur (3) und Gehäuse (4) mit einer Hartlot-Verbindung (6) ausgeführt ist, **dadurch gekennzeichnet, dass** mindestes zwei voneinander verschiedene Mittel zur Begrenzung der Hartlot-Verbindung (6) vorgesehen sind und die Mittel wenigstens zwei aus der folgenden Gruppe von Mitteln umfassen:
- eine Nut (7) im Gehäuse (4),
- eine Mikrostruktur (8) außen an der Wabenstruktur (3).
- eine keramische Beschichtung (9),
- eine zwischen der Wabenstruktur (3) und dem Gehäuse (4) angeordnete Zwischenschicht (10).

2. Wabenkörper (1) nach Patentanspruch 1, **dadurch gekennzeichnet, dass** die Wabenstruktur (3) mit einer Mehrzahl von zumindest teilweise strukturierten metallischen Lagen (11) gebildet ist, die eine Materialdicke (12) kleiner 60 µm aufweisen.

3. Wabenkörper (1) nach Patentanspruch 1 oder 2, **dadurch gekennzeichnet, dass** ein umlaufender Bereich (5) einer Hartlot-Verbindung (6) vorgesehen ist und die Mittel zur Begrenzung zwischen diesem Bereich (5) einer Hartlot-Verbindung (6) und einer Stirnseite (13, 14) des Wabenkörpers (1) angeordnet sind.

4. Wabenkörper (1) nach einem der vorhergehenden Patentansprüche, **dadurch gekennzeichnet, dass** der mindestens eine Bereich (5) einer Hartlot-Verbindung (6) näher an einer zweiten Stirnseite (14) als einer ersten Stirnseite (13) angeordnet ist und dass die Mittel zwischen der ersten Stirnseite (13) und dem Bereich (5) vorgesehen sind.

5. Verfahren zur Herstellung eines Wabenkörpers (1), welcher wenigstens eine Wabenstruktur (3) und zumindest ein Gehäuse (4) aufweist, das die wenigstens eine Wabenstruktur (3) zumindest teilweise umgibt, umfassend zumindest folgende Schritte:
- Auswahl wenigstens eines Bereichs (5) einer Hartlot-Verbindung (6) zwischen Wabenstruktur (3) und Gehäuse (4),
- Auswahl einer Einschubrichtung (15) der Wabenstruktur (3) in das Gehäuse (4),
- Vorsehen einer Nut (7) im Gehäuse (4), welche in Einschubrichtung (15) gesehen vor dem Bereich (5) einer Hartlot-Verbindung (6) positioniert ist,
- Vorsehen eines weiteren Mittels zur Begrenzung der Hartlot-Verbindung (6) aus der Gruppe:
- Mikrostruktur (8) außen an der Wabenstruktur (3)
- Keramische Beschichtung (9)
- zwischen der Wabenstruktur (3) und dem Gehäuse (4) angeordnete Zwischenschicht (10),
- Beloten des Bereichs (5),
- Einschieben der Wabenstruktur (3) in das Gehäuse (4),
- Ausbilden einer Hartlot-Verbindung (6) im Bereich (5).

## Claims

1. A honeycomb body (1) for an exhaust gas treatment unit (2) having at least one honeycomb structure (3) and at least one housing (4) which at least partially surrounds the at least one honeycomb structure (3), wherein at least one region (5) between the honeycomb structure (3) and housing (4) is embodied as a brazed joint (6), **characterized in that** at least two means, which are different from one another, are provided for delimiting the brazed joint (6) and the means comprise at least two from the following group of means:
- a groove (7) in the housing (4),
- a microstructure (8) on the outside of the honeycomb structure (3),
- a ceramic coating (9),
- an intermediate layer (10) which is arranged between the honeycomb structure (3) and the housing (4).

2. The honeycomb body (1) as claimed in patent claim 1, **characterized in that** the honeycomb structure (3) is formed with a plurality of at least partially structured metallic layers (11) which have a material thickness (12) which is less than 60 µm.

3. The honeycomb body (1) as claimed in patent claim 1 or 2, **characterized in that** a circumferential region (5) of a brazed joint (6) is provided, and the delimiting means are arranged between this region (5) of a brazed joint (6) and an end face (13, 14) of the honeycomb body (1).

4. The honeycomb body (1) as claimed in one of the preceding patent claims, **characterized in that** the at least one region (5) of a brazed joint (6) is arranged closer to a second end face (14) than to a first end face (13), and **in that** the means are provided between the first end face (13) and the region (5).

5. A method for manufacturing a honeycomb body (1) which has at least one honeycomb structure (3) and at least one housing (4) which at least partially surrounds the at least one honeycomb structure (3), comprising at least the following steps:
- selection of at least one region (5) of a brazed joint (6) between honeycomb structure (3) and housing (4),
- selection of an insertion direction (15) of the honeycomb structure (3) into the housing (4),
- provision of a groove (7) in the housing (4) which, viewed in the insertion direction (15), is positioned before the region (5) of a brazed joint (6),
- provision of a further means for delimiting the brazed joint (6) from the following group of means:
- a microstructure (8) on the outside of the honeycomb structure (3),
- a ceramic coating (9),
- an intermediate layer (10) which is arranged between the honeycomb structure (3) and the housing (4),
- placing brazing material in the region (5),
- insertion of the honeycomb structure (3) into the housing (4), and
- formation of a brazed joint (6) in the region (5).

## Revendications

1. Corps en nids d'abeilles (1) pour une unité de traitement de gaz d'échappement (2), comportant au moins une structure en nids d'abeilles (3) et au moins un boîtier (4) qui entoure au moins partiellement l'au moins une structure en nids d'abeilles (3), au moins une région (5) entre la structure en nids d'abeilles (3) et le boîtier (4) étant exécutée avec une liaison de brasage fort (6), **caractérisé en ce qu'**au moins deux moyens différents l'un de l'autre sont prévus pour limiter la liaison de brasage fort (6) et **en ce que** les moyens comprennent au moins deux du groupe suivant de moyens :
- une rainure (7) dans le boîtier (4),
- une microstructure (8) à l'extérieur sur la structure en nids d'abeilles (3),
- un revêtement céramique (9),
- une couche intermédiaire (10) agencée entre la structure en nids d'abeilles (3) et le boîtier (4).

2. Corps en nids d'abeilles (1) selon la revendication 1, **caractérisé en ce que** la structure en nids d'abeilles (3) est formée avec une pluralité de couches métalliques au moins partiellement structurées (11), qui comportent une épaisseur de matériau (12) moins que 60 µm.

3. Corps en nids d'abeilles (1) selon la revendication 1 ou 2, **caractérisé en ce qu'**une région qui s'étend de manière périphérique (5) d'une liaison de brasage fort (6) est prévue et que les moyens pour la limitation entre cette région (5) d'une liaison de brasage fort (6) et une face frontale (13, 14) du corps en nids d'abeilles (1) sont agencés.

4. Corps en nids d'abeilles (1) selon l'une des revendications précédentes, **caractérisé en ce que** l'au moins une région (5) d'une liaison de brasage fort (6) est agencée plus près d'une deuxième face frontale (14) que d'une première face frontale (13) et **en ce que** les moyens sont prévus entre la première face frontale (13) et la région (5).

5. Procédé de fabrication d'un corps en nids d'abeilles (1), lequel comporte au moins une structure en nids d'abeilles (3) et au moins un boîtier (4) qui entoure au moins partiellement l'au moins une structure en nids d'abeilles (3), comprenant au moins les étapes suivantes :
- choix d'au moins une région (5) d'une liaison de brasage fort (6) entre la structure en nids d'abeilles (3) et le boîtier (4),
- choix d'un sens d'interposition (15) de la structure en nids d'abeilles (3) dans le boîtier (4),
- prévoir une rainure (7) dans le boîtier (4), qui, vu dans le sens d'interposition (15), est positionnée en amont de la région (5) d'une liaison de brasage fort (6),
- prévoir un autre moyen pour limiter la liaison de brasage fort (6) du groupe :
- microstructure (8) à l'extérieur sur la structure en nids d'abeilles (3),
- revêtement céramique (9),
- couche intermédiaire (10) agencée entre la structure en nids d'abeilles (3) et le boîtier (4),
- garnir de brasure la région (5),
- interposition de la structure en nids d'abeilles (3) dans le boîtier (4),
- réalisation d'une liaison de brasage fort (6) dans la région (5).
